# EUROPÄISCHE PATENTSCHRIFT

(11) **EP 1 059 783 B1**
(45) Veröffentlichungstag und Bekanntmachung des Hinweises auf die Patenterteilung: **19.01.2005**
(21) Anmeldenummer: 00111402.4
(22) Anmeldetag: 26.05.2000
(51) Int. Cl.: H04L 25/02

(54) **Bussender, der die Zeitdauer eines Sendesignals begrenzt**
Bus driver, which limits the duration of transmission signals
Circuit d'attaque de bus, qui limite la durée des signaux de transmission

(30) Priorität: 08.06.1999 DE 19926096
(43) Veröffentlichungstag der Anmeldung: 13.12.2000
(73) Patentinhaber: SIEMENS AKTIENGESELLSCHAFT, 80333 München (DE)
(72) Erfinder: Fichtner, Norbert, Dipl.-Ing., 84069 Schierling (DE); Munz, Dieter, Dipl.-Ing., 91315 Höchstadt (DE)

(56) Entgegenhaltungen:
- US-A- 3 500 458
- US-A- 4 034 297
- US-A- 4 794 620

## Beschreibung

Die Erfindung bezieht sich auf eine Einrichtung zum Senden eines von einem Busteilnehmer für ein Bussystem, insbesondere für das Bussystem EIB der European Installation Bus Association EIBA, bereitgestellten Sendesignals.

Das Bussystem EIB ist ein Zweidraht-Bussystem, bei dem die Spannungsversorgung der jeweils über ein Interface an das Bussystem angeschlossenen Busteilnehmer und die Datenübertragung zwischen diesen auf einem Leiterpaar zusammengefasst sind.

Das von einem Busteilnehmer zur Kommunikation mit anderen Busteilnehmern an die Busleitung der EIB abgegebene binäre Sendesignal setzt sich aus einer Abfolge von binären Zuständen "Null" und "Eins" zusammen. Wird eine logische "Eins" übertragen, so bleibt der EIB im Ruhezustand. Eine logische "Null" setzt sich zusammen aus einem 35 µs andauernden negativen Aktivimpuls sowie einem anschließenden Ausgleichsimpuls von 69 µs. Dies entspricht einer Baudrate von 9.600. Die Sendeleistung befindet sich dabei in einer Größenordnung, die im ungünstigsten Fall bei einer zu langen Sendedauer zu einer Zerstörung der Sendestufe und des externen Sendewiderstandes infolge Überhitzung führen kann. Die zulässige maximale Leistungsaufnahme der Sendestufe und eines externen Sendewiderstandes ist dabei so bemessen, dass bei maximaler Telegrammlänge, ungünstigstem Telegramminhalt (Datenbytes "00H") und maximaler Wiederholrate die zulässige maximale Verlustleistung nicht überschritten wird, wobei das Bit-, Byte- und Telegrammformat sowie das Übertragungsprotokoll auf dem EIB eingerechnet wird. Das Sendesignal wird dabei üblicherweise von einem Mikroprozessor bereitgestellt. Ist das Sendesignal beispielsweise aufgrund eines Programmfehlers zu lange, kann dies zur Zerstörung der Sendestufe und des Sendewiderstandes R_{S} führen, der zur Verlagerung eines Teils der Sendeleistung aus dem zur Kommunikation mit dem EIB vorgesehenen Interface, beispielsweise ein TPUART-IC, dient.

In diesem Zusammenhang ist aus der Druckschrift US 4,497,620 ein Hochfrequenzmodem zur Datenübertragung über eine Hochfrequenzdatenverbindung bekannt. Um zu verhindern, dass ein defekter Computer eine Datenverbindung blockiert, ist das Modem mit einer Überwachungseinheit zur zeitlichen Überwachung der Übertragung ausgestattet. Eine vorgegebene Zeit nach dem Sendebeginn wird so die Übertragung automatisch unterbrochen. Die vorgegebene Zeitdauer ist unabhängig von dem zu sendenden Signal.

Der Erfindung liegt nun die Aufgabe zugrunde, eine Einrichtung zum Senden eines von einem Busteilnehmer eines Bussystems bereitgestellten Sendesignals anzugeben, mit dem eine Zerstörung der Sendestufe bei fehlerhaft zu lange angelegtem Sendesignal verhindert ist.

Die genannte Aufgabe wird gemäß der Erfindung gelöst mit einer Einrichtung mit den Merkmalen des Patentanspruches 1. Die erfindungsgemäße Einrichtung enthält eine Sendestufe, der eine Zeitstufe vorgeschaltet ist, die die Zeitdauer des Sendevorganges unabhängig von der Zeitdauer des Sendesignals auf einen vorgegebenen Wert begrenzt und die von dem Sendesignal getriggert ist. Durch diese Maßnahme ist sichergestellt, dass auch bei fehlerhaft zu lange angelegtem Sendesignal eine Zerstörung der Sendestufe nicht möglich ist.

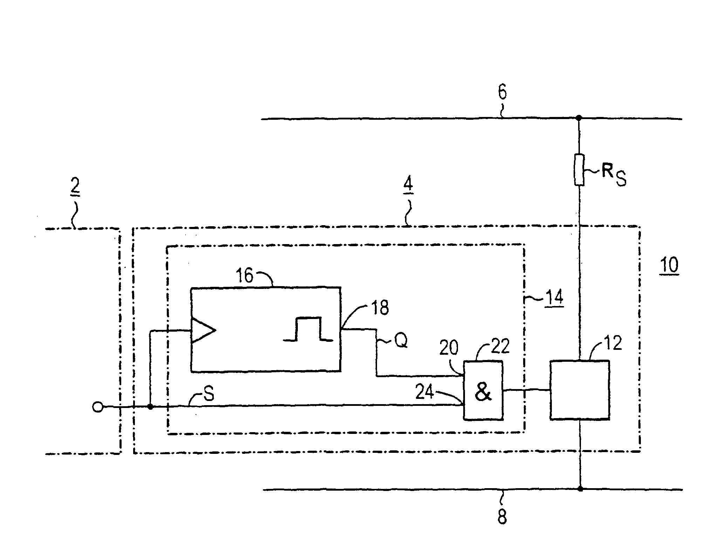

In einer vorteilhaften Ausgestaltung der Erfindung wird das Ausgangssignal der Zeitstufe mit dem Sendesignal in einem UND-Glied einer UND-Verknüpfung unterzogen, wobei der Ausgang des UND-Gliedes an einen Eingang der Sendestufe angeschlossen ist. Zur weiteren Erläuterung der Erfindung wird auf das Ausführungsbeispiel der Zeichnung verwiesen, in deren einziger Figur eine Einrichtung gemäß der Erfindung in einem Blockschaltbild schematisch veranschaulicht ist.

Gemäß der Figur wird von einem Busteilnehmer 2 über ein Interface 4 ein Sendesignal S an die beiden Busleiter 6 und 8 eines Bussystems 10, im Beispiel das Zweidrahtbussystem EIB, weitergeleitet. Das Interface 4 umfasst hierzu eine Sendestufe 12, die über einen Sendewiderstand R_{S} an den Busleiter 6 gekoppelt ist. Der Sendestufe 12 ist eine Zeitschaltung 14 vorgeschaltet, die eine triggerbare Zeitstufe 16, beispielsweise ein Monoflop oder ein Zähler, umfasst und durch das Sendesignal S getriggert ist. Ein Ausgang 18 der Zeitstufe 16 ist an den ersten Eingang 20 eines UND-Gliedes 22 angeschlossen, dessen Ausgang mit der Sendestufe 12 verbunden ist. Das Sendesignal S wird außerdem an einen zweiten Eingang 24 des UND-Gliedes 22 angelegt. Am Eingang der Sendestufe 12 steht somit nur dann das Sendesignal S an, solange am Ausgang 18 der Zeitstufe 16 und somit am ersten Eingang 20 des UND-Gliedes 22 ein dem logischen Wert des Aktivzustandes des Sendesignals S entsprechender logischer Wert des Ausgangssignals Q anliegt. Die Zeitdauer, in der ein solcher logischer Wert des Ausgangssignals Q anliegt ist durch die Zeitstufe 16 vorgegeben und auf die Belastbarkeit der Sendestufe 12 und des externe Sendewiderstandes R_{S} abgestimmt. Durch diese Maßnahme sind sowohl die Sendestufe 12 als auch der externe Sendewiderstand R_{S} wirksam vor einer Überlastung geschützt.

## Patentansprüche

1. Einrichtung zum Senden eines von einem Busteilnehmer (2) für ein Bussystem (10) bereitgestellten Sendesignals (S), mit einer Sendestufe (12), der eine Zeitstufe (16) vorgeschaltet ist, die die Zeitdauer des Sendevorgangs unabhängig von der Zeitdauer des Sendesignals (S) auf einen vorgegebenen Wert begrenzt,
**dadurch gekennzeichnet, dass**
die Zeitstufe (16) derart ausgestaltet ist, daß diese von dem Sendesignal (S) getriggert ist.

2. Einrichtung nach Anspruch 1, wobei das Ausgangssignal (Q) der Zeitstufe (16) mit dem Sendesignal (S) in einem UND-Glied (22) einer UND-Verknüpfung unterzogen wird, und wobei der Ausgang des UND-Gliedes (22) an den Eingang der Sendestufe (12) angeschlossen ist.

## Claims

1. Device for transmitting a transmission signal (S) provided by a bus user (2) for a bus system (10), comprising a transmitter stage (12) which is preceded on the input side by a timer stage (16) which limits the duration of the transmission operation to a predetermined value independently of the duration of the transmission signal (S),
**characterised in that**
the timer stage (16) is embodied in such a way that it is triggered by the transmission signal (S).

2. Device according to claim 1, wherein the output signal (Q) of the timer stage (16) is subjected to an AND operation with the transmission signal (S) in an AND element (22), and wherein the output of the AND element (22) is connected to the input of the transmitter stage (12).

## Revendications

1. Dispositif pour émettre un signal (S) d'émission mis à disposition par un abonné (2) de bus pour un système (10) de bus, comportant un étage (12) d'émission en amont duquel est monté un étage (16) de minuterie qui limite à une valeur prescrite la durée de l'opération d'émission indépendamment de la durée du signal (S) d'émission,
**caractérisé en ce que**
l'étage (16) de minuterie est réalisé de manière à être déclenché par le signal (S) d'émission.

2. Dispositif suivant la revendication 1, le signal (Q) de sortie de l'étage (16) de minuterie comportant le signal (S) de sortie est soumis dans un élément (22) ET à une combinaison ET, et la sortie de l'élément (22) ET étant raccordée à l'entrée de l'étage (12) d'émission.
